(19) **Europäisches Patentamt / European Patent Office / Office européen des brevets**

(11) **EP 1 474 002 B1**

(12) **FASCICULE DE BREVET EUROPEEN**

(45) Date de publication et mention de la délivrance du brevet:
**09.12.2009 Bulletin 2009/50**

(21) Numéro de dépôt: **03712257.9**

(22) Date de dépôt: **17.01.2003**

(51) Int Cl.:
*A23C 9/127* (2006.01)      *A23C 9/123* (2006.01)

(86) Numéro de dépôt international:
**PCT/FR2003/000152**

(87) Numéro de publication internationale:
**WO 2003/070011 (28.08.2003 Gazette 2003/35)**

(54) **PROCEDE DE FABRICATION DE PRODUITS LAITIERS FERMENTES AVEC DES ENZYMES D'ORIGINE BACTERIENNE**

VERFAHREN ZUR HERSTELLUNG VON SAUERMILCHPRODUKTEN MIT ENZYMEN BAKTERIELLEN URSPRUNGS

NOVEL METHOD FOR THE PRODUCTION OF FERMENTED MILK PRODUCTS BY MEANS OF ENZYMES HAVING A BACTERIAL ORIGIN

(84) Etats contractants désignés:
**AT BE BG CH CY CZ DE DK EE ES FI FR GB GR HU IE IT LI LU MC NL PT SE SI SK TR**

(30) Priorité: **15.02.2002 FR 0201961**

(43) Date de publication de la demande:
**10.11.2004 Bulletin 2004/46**

(73) Titulaire: **Compagnie Gervais Danone 75009 Paris (FR)**

(72) Inventeurs:
• **DE GREEF TRIAL, Nathalie**
  **F-92340 Bourg la Reine (FR)**
• **QUEGUINER, Claire**
  **F-92260 Fontenay aux Roses (FR)**
• **GRUGIER, Fanny**
  **F-22150 Gausson (FR)**
• **PAQUET, Denis**
  **F-92140 Clamart (FR)**

(74) Mandataire: **Bourout, Gaëlle et al Cabinet Plasseraud 52 rue de la Victoire 75440 Paris Cedex 09 (FR)**

(56) Documents cités:
**EP-A- 0 575 010     EP-A- 0 810 289 FR-A- 2 443 211**

• **PRABHA H R ET AL: "Quality of yoghurt and probiotic yoghurt prepared from milk precultured with psychrotrophic Pseudomonas spp." JOURNAL OF FOOD SCIENCE AND TECHNOLOGY, INDIA 1997 DEP. OF DAIRY MICROBIOL., DAIRY SCI. COLL., UNIV. OF AGRIC. SCI., HEBBAL, BANGALORE 560024, INDIA, vol. 34, no. 5, pages 395-398, XP008009109**
• **M. COUSIN: "Lactic acid production by Streptococcus thermophilus and Lactobacillus bulgaricus in milk precultured with psychrotrophic bacteria" JOURNAL OF FOOD PROTECTION, vol. 40, no. 7, pages 475-479, XP008020081**
• **GASSEM M A ET AL: "PHYSICAL PROPERTIES OF YOGURT MADE FROM MILK TREATED WITH PROTEOLYTIC ENZYMES" JOURNAL OF DAIRY SCIENCE, AMERICAN DAIRY SCIENCE ASSOCIATION. CHAMPAIGN, ILLINOIS, US, vol. 74, no. 5, 1 mai 1991 (1991-05-01), pages 1503-1511, XP000218108 ISSN: 0022-0302 cité dans la demande**
• **COUSIN M A ET AL: "Cottage cheese and yogurt manufactured from milks precultured with psychrotrophic bacteria." CULTURED DAIRY PRODUCTS JOURNAL 1977 DEP. OF FOOD SCI. & FOOD RES. INST., UNIV. OF WISCONSIN-MADISON, MADISON, WISCONSIN 53760, USA, vol. 12, no. 2, pages 15-18, 30, XP008009108 cité dans la demande**
• **MARTENS R: "Effect of some variables on consistency and flavour of stirred yoghurt." REVUE DE L'AGRICULTURE 1972, vol. 25, no. 3, pages 461-480, XP008019989**

- FIRA D ET AL: "Characterization of cell envelope-associated proteinases of thermophilic lactobacilli." JOURNAL OF APPLIED MICROBIOLOGY 90 (1) 123-130 2001 CORRESPONDENCE (REPRINT) ADDRESS, L. TOPISIROVIC, INST. OF MOLECULAR GENETICS & GENETIC ENG., V. STEPE 444A, PO BOX 446, 11001 BELGRADE, YUGOSLAVIA. E-MAIL LAB6 (A)EUNET.YU, XP008019977
- DATABASE WPI Section Ch, Week 198715 Derwent Publications Ltd., London, GB; Class D13, AN 1987-106312 XP002216643 & JP 62 055039 A (MORINAGA & CO LTD), 6 mars 1987 (1987-03-06)
- DATABASE FSTA [en ligne] INTERNATIONAL FOOD INFORMATION SERVICE (IFIS), FRANFURT/MAIN, DE; JIMENEZ-FLORES R ET AL: "Correlation between protein integrity and the quality of dairy products." Database accession no. 96-1-05-p0256 XP002248812 & JOURNAL OF DAIRY SCIENCE 1995 DEP. OF FOOD SCI., UNIV. OF ILLINOIS, URBANA, IL 61801, USA, vol. 78, no. Suppl. 1, page 145

**Description**

La présente demande de brevet est relative à un nouveau procédé de fabrication de produits laitiers fermentés qui met en oeuvre des enzymes d'origine bactérienne, et notamment des enzymes originaires de bactéries qui jusqu'alors étaient considérées comme contaminantes du lait, ainsi qu'aux nouveaux produits laitiers ainsi obtenus. Ce nouveau procédé est plus particulièrement adapté à la fabrication de yoghourts et de laits fermentés.

Il présente en effet l'avantage d'améliorer la texture de tels produits laitiers, et notamment d'en améliorer la viscosité, sans pour autant induire un phénomène de synérèse (exsudation de sérum) qui serait inacceptable pour un produit laitier de type yoghourt ou lait fermenté. Les analyses sensorielles réalisées par les inventeurs n'ont en outre pas révélé de mauvais goût dans les yoghourts et laits fermentés fabriqués conformément à la présente invention. Ce résultat remarquable est, conformément à la présente invention, obtenu en protéolysant au moins une caséine du lait, à savoir au moins la caséine kappa, et en brassant le produit après la fermentation. Plus particulièrement, conformément à la présente invention, cette caséinolyse est menée à l'aide d'enzymes kappa caséinolytiques d'origine bactérienne, et plus particulièrement à l'aide d'enzymes kappa caséinolytiques originaires de bactéries qui étaient jusqu'alors considérées comme contaminantes du lait, telles que les bactéries psychrotrophes protéolytiques et des bactéries lactiques protéolytiques, et préférentiellement des enzymes thermorésistantes originaires de telles bactéries.

Par bactérie ou plus généralement micro-organisme «psychrotrophe », il est entendu dans la présente demande un microorganisme qui est capable de croître à 7°C ou moins, indépendamment de sa température optimale de croissance. Cette définition est celle de la Fédération Internationale de Laiterie (FIL).

Par enzyme « thermorésistante », il est entendu dans la présente demande une enzyme qui a conservé une activité kappa caséinolytique détectable après avoir subi un traitement thermique de type pasteurisation (95°C pendant au moins 5 min).

Pour améliorer la texture de produits laitiers fermentés de type yoghourt ou lait fermenté, on procède actuellement par concentration du substrat laitier, ou bien par ajout de produits issus du lait, et notamment par ajout de protéines telles que caséinate, protéines de lactosérum, ou par ajout d'agents texturants (épaississants, gélifiants) tels que amidon, pectine, gélatine.

La protéolyse de caséine en général, et de caséine kappa en particulier, n'était pas, dans l'art antérieur, un phénomène souhaité lors de la fabrication de produits laitiers fermentés de type yoghourts et laits fermentés. En effet, les enzymes caséinolytiques telles que, par exemple, celle qui est contenue dans la présure, et qui est utilisée pour la fabrication des fromages et fromages frais, étaient connues, du fait de leur effet coagulant, pour être inductrices d'importants phénomènes de synérèse. Or, si la formation de petit-lait et de sérum est recherchée et nécessaire à la fabrication de fromages et de fromages frais (récupération du caillé), elle n'est par contre pas souhaitable lors de la fabrication de yoghourts et laits fermentés, car elle conduit à une texture qui n'est pas acceptable pour ce type de produits laitiers (texture granuleuse, importante exsudation de sérum). C'est pourquoi, jusqu'alors, on n'utilisait pas d'enzymes caséinolytiques lors de la fabrication de yoghourts et laits fermentés, et on veillait même à éviter que de telles enzymes ne soient présentes ou produites dans le substrat laitier.

Le développement de microorganismes contaminants, tels que les bactéries psychrotrophes et les bactéries lactiques, n'était par ailleurs pas non plus un phénomène recherché lors de la fabrication de produits laitiers en général, et de yoghourts et laits fermentés en particulier.

Les bactéries lactiques, c'est-à-dire l'ensemble des bactéries qui produisent de l'acide lactique à partir de sucres, et plus particulièrement à partir de lactose, sont des bactéries ubiquitaires qui contaminent le lait au moment de la collecte, et qui, si on les laisse se multiplier, font cailler le lait. C'est pourquoi ont été mis en place depuis de nombreuses années des systèmes permettant de réfrigérer le lait dès le lieu de collecte (stockage usuel à 4°C à la ferme), et une pré-pasteurisation du lait dès son arrivée à l'usine, afin d'ainsi éviter que le lait ne caille avant qu'il ne soit transformé en produit laitier de qualité alimentaire.

Les bactéries psychrotrophes sont également des bactéries ubiquitaires. On les trouve notamment à la surface de la mamelle, où elles représentent 95% de la flore totale (3% d'entre elles étant des *Pseudomonas*). Le contact du lait avec de telles sources peut alors conduire à une contamination par les bactéries psychrotrophes. La phase critique de contamination du lait se situe donc le plus souvent au moment de la traite automatisée. Or, lors du stockage réfrigéré qui est pratiqué pour éviter notamment le développement de bactéries lactiques, les bactéries psychrotrophes se trouvent, quant à elles, dans des conditions favorables à leur développement. C'est par exemple le cas des *Pseudomonas,* qui présentent dans du lait à 4°C un temps de génération de 6 à 8 heures. Au cours de leur croissance, ces bactéries synthétisent des lipases et protéases thermorésistantes qui sont connues pour être à l'origine d'altérations du lait et des produits laitiers. De tels micro-organismes étaient donc considérés comme constituant une contamination microbiologique classique du lait, qu'il était nécessaire d'éviter.

Ainsi, Gassem et Franck 1991 (« Physical properties of yogurt made from milk treated with proteolytic enzymes », J. Dairy Sci. 74:1503-1511) décrivent des essais effectués en présence de protéases partiellement purifiées à partir de bactéries psychrotrophes (dose de 200 mg/litre), et rapportent que les yoghourts ainsi fabriqués présentent une viscosité apparente et une fermeté plus forte que les yoghourts témoins, mais qu'ils présentent une plus forte synérèse. Les auteurs concluent en conseillant de limiter au maximum les activités protéolytiques lors de la fabrication des yoghourts.

Cousin et Marth 1977 (« Cottage Cheese and Yoghurt Manufactured from Milks Precultured with Psychrotrophic Bacteria », Cultured Dairy Products Journal, Mai 1977, pages 15-18 et 30) ont quant à eux décrit des essais d'ensemencement du lait par des bactéries psychrotrophes (inoculation à 1% par une culture sur lait écrémé pendant 24h à 21°C de bactéries psychrotrophes du genre *Pseudomonas* ou *Flavobacterium*). Ils ont à cette occasion noté une augmentation de la tension du caillé lorsque le lait est stocké à 4°C, mais indépendamment du fait qu'il y ait eu ou non ensemencement avec des bactéries psychrotrophes. En outre, les analyses sensorielles montraient que les yoghourts faits avec le lait ensemencé sont jugés plus acides et amers. Les auteurs concluent alors que pour produire des produits laitiers fermentés, il est conseillé d'éviter le développement de bactéries psychrotrophes dans le lait frais.

La protéolyse du lait était donc considérée dans l'art antérieur comme une source de problèmes technologiques et de défauts dans le lait et les produits laitiers, tels que la formation d'un caillé fragile accompagné de synérèse au cours de la fabrication de yoghourts (Tamine & Robinson 1985, « Yoghurt - Science and Technology », Ed. Woodhead Publishing Ltd 1999, cf. page 17), et une gélification du lait au cours du traitement thermique UHT (Stephaniak & Sorhaug 1995, Thermal denaturation of bacterial enzymes in milk. International dairy federation bulletin « Heat induced changes in milk », 1, p. 349-363).

En allant totalement à l'encontre des préjugés techniques de l'art antérieur, les inventeurs quant à eux proposent, pour fabriquer des produits laitiers fermentés de type yoghourts et laits fermentés, non seulement de protéolyser au moins une des caséines naturellement contenues dans le lait, à savoir au moins la caséine kappa, et de brasser le produit obtenu après fermentation, mais aussi de réaliser cette caséinolyse à l'aide d'enzymes kappa caséinolytiques d'origine bactérienne, et notamment à l'aide d'enzymes kappa caséinolytiques originaires de bactéries qui jusqu'alors étaient considérées comme des microorganismes contaminants du lait, telles que les bactéries psychrotrophes protéolytiques et des bactéries lactiques protéolytiques. Les inventeurs ont en effet mis en évidence qu'il est en fait avantageux d'utiliser des enzymes kappa-caséinolytiques pour fabriquer des laits fermentés et yoghourts, et préférentiellement des enzymes kappa-caséinolytiques d'origine bactérienne, et que les bactéries dites contaminantes du lait telles que les bactéries psychrotrophes protéolytiques et des bactéries lactiques protéolytiques en constituent une source avantageuse. Selon un mode préféré de réalisation, on met en oeuvre, conformément à la présente invention, des enzymes kappa caséinolytiques d'origine bactérienne thermorésistantes, c'est-à-dire des enzymes qui ont conservé une activité kappa caséinolytique détectable après avoir subi un traitement thermique de type pasteurisation (95°C pendant au moins 5 min).

Les inventeurs ont démontré que ces moyens permettent, de façon surprenante et inattendue, d'améliorer la texture, et en particulier la viscosité, de yoghourts et laits fermentés, sans pour autant induire une synérèse qui serait inacceptable pour un produit de ce type (pas d'exsudation ni de décantation). Les analyses sensorielles réalisées par les inventeurs n'ont en outre pas révélé de mauvais goût dans les produits fabriqués conformément à la présente invention.

En outre, le document PRABHA H R ET AL: "Quality of yoghurt and probiotic yoghurt prepared from milk pre-cultured with psychrotrophic Pseudomonas spp." JOURNAL OF FOOD SCIENCE AND TECHNOLOGY, INDIA 1997, vol. 34, no. 5 divulgue un procédé de fabrication d'un yoghourt qui comprend une étape d'inoculation de bactéries psychrotrophes avant l'étape de traitement thermique.

EP-A-0 810 289 (NESTLE SA) 3 décembre 1997, divulgue une protéase PrtP de Lactobacillus bulgaricus et des cellules recombinantes, issues notamment de Lactococcus lactis, exprimant cette protéase et susceptibles d'être introduites dans un produit laitier tel qu'un fromage ou un yoghourt pour accélérer sa fermentation.

La présente demande de brevet vise donc un nouveau procédé de fabrication de produits laitiers fermentés, et notamment de yoghourts et laits fermentés selon revendication 1, qui comprend l'étape suivante :

- l'on soumet un substrat laitier dont la teneur en protéines est différente de zéro mais inférieure ou égale à 6%, à une fermentation lactique et à une kappa caséinolyse, de manière à atteindre en fin de fermentation lactique un taux de kappa caséinolyse égal ou supérieur à 20%, préférentiellement égal ou supérieur à 30%, plus préférentiellement égal ou supérieur à 40%, encore plus préférentiellement égal ou supérieur à 50% .

Dans la présente demande, il est donné aux termes « yoghourts » et « laits fermentés » leurs significations usuelles. Plus particulièrement, ces appellations correspondent à celles définies en France par le Décret n° 88-1203 du 30 décembre 1988 (publié au Journal Officiel de la République Française du 31 décembre 1988). Le texte de ce Décret est reproduit ci-dessous, en fin de partie descriptive, à la suite des exemples.

Afin d'obtenir un produit « yoghourt ou lait fermenté » tel que défini dans ledit Décret français, et comme, donc, visé dans la présente demande de brevet, il est notamment rappelé qu'il ne doit pas y avoir élimination de sérum, et qu'il doit y avoir un traitement thermique au moins équivalent à la pasteurisation. Un traitement standard de pasteurisation est par exemple un traitement à 92-95°C pendant 5 à 10 min. Du fait de l'application d'un traitement thermique qui est au moins équivalent à la pasteurisation standard, les protéines sériques du substrat laitier sont globalement dénaturées (de 25 à 99% d'entre elles, environ).

Par « kappa caséinolyse » ou « traitement kappa caséinolytique », il est ici entendu protéolyse de la caséine kappa. De même, le terme « enzyme kappa caséinolytique » vise une enzyme capable de protéolyser la caséine kappa. Avantageusement, ladite kappa caséinolyse se déroule au moins partiellement de manière concomitante à ladite fermentation lactique. Comme présenté plus en détail ci-dessous, ladite enzyme kappa caséinolytique peut être ajoutée ou apportée (ou sa production déclenchée) après ledit traitement thermique (par exemple au début ou au cours de la fermentation lactique), ou bien avant ou au démarrage dudit traitement thermique, mais dans ce dernier cas, il faut alors veiller à ne pas induire de précipitation lors de ce traitement thermique.

Comme le lait contient naturellement des caséines kappa et a naturellement une teneur en protéines différente de zéro, tout type de substrat laitier est *a priori* adapté à la mise en oeuvre de la présente invention. On choisira néanmoins bien entendu un substrat laitier qui, dans la mesure où il est destiné à la fabrication de yoghourts et laits fermentés, présente une teneur en protéines (avant fermentation) inférieure ou égale à 6%. Préférentiellement, on choisira un substrat laitier dont la teneur en protéines est comprise entre 3 et 5% bornes incluses, plus préférentiellement entre 3,4 et 5%, encore plus préférentiellement entre 3,6 et 4,8%. Une méthode conventionnelle pour mesurer la teneur en protéines d'un substrat laitier consiste à mesurer la teneur en azote total, et à retrancher la teneur en azote non protéique en mettant en oeuvre la méthode de Kjeldahl décrite dans « Science du lait - Principes des techniques laitières », quatrième édition, 1984, par C. Alais (Ed. SEPAIC), pages 195-196.

Le terme de substrat laitier est ici entendu dans sa signification usuelle pour la fabrication de produits laitiers fermentés de type yoghourts et laits fermentés, c'est-à-dire tout type de substrat dont la composition est adaptée à la mise en oeuvre d'une fermentation lactique en vue de la fabrication de yoghourts et laits fermentés adaptés à la consommation humaine. Généralement, le substrat laitier utilisé correspond en fait à du lait tel que collecté (par exemple du lait de vache, de brebis, de chèvre) qui, éventuellement, a été pré-pasteurisé et/ou écrémé. Le plus généralement, et notamment dans l'industrie, la composition du lait est en outre « standardisée » par ajout de produits dérivés du lait tels que poudre de lait écrémé, et/ou poudres de protéines laitières (caséinates ou WPC), et/ou matières grasses (crème, par exemple). Les substrats laitiers visés pour la présente invention ont donc en fait le plus généralement une composition qui correspond soit à celle du lait tel que collecté, soit à celle du lait standardisé, et ont pu être pré-pasteurisés (75°C pendant 10 à 30s) et/ou écrémés.

Le nouveau procédé conforme à l'invention peut être mené pour toute fermentation lactique. Les étapes d'un procédé de fermentation lactique peuvent être classiquement schématisées comme suit :

-   après collecte, le lait est généralement pré-pasteurisé à 75°C pendant 10 à 30 secondes, écrémé et conservé jusqu'à utilisation par stockage réfrigéré,
-   le lait écrémé est standardisé en protéines par des méthodes connues de l'homme du métier, notamment par addition de poudre de lait écrémé, de poudres de protéines laitières (caséinates ou WPC) et éventuellement en matière grasse (par exemple, de la crème), afin d'obtenir la composition souhaitée,
-   après réhydratation des poudres sous agitation pendant 30 min. à 1 heure, le mélange laitier ainsi obtenu est soumis à un traitement thermique de pasteurisation à une température de 92 à 95°C pendant 5 à 10 min. puis à une homogénéisation sous pression dite en phase descendante ; alternativement, l'homogénéisation peut être effectuée avant le traitement thermique, elle est alors dite en phase montante,
-   le mélange laitier est ensuite refroidi à une température supérieure de 1 ou 2 degrés à celle de la fermentation, et est ensemencé par un ferment lactique ; la fermentation est effectuée selon des procédures classiques, elle est arrêtée à un pH compris entre 4 et 5, de préférence entre 4,5 et 4,7.

Lorsque le mélange laitier est inoculé avec un ferment composé de souches de *Lactobacillus bulgaricus* et *de Streptococcus thermophilus*, le produit est un yoghourt. Lorsque le mélange laitier est, en outre des souches précédentes, ensemencé avec d'autres espèces de bactéries lactiques notamment *Bifidobacterium, Lactobacillus acidophilus*, *Lactobacillus casei* ou encore *Lactobacillus helveticus*, le produit fini est un lait fermenté.

La kappa caséinolyse doit être menée de manière ménagée, c'est-à-dire que la réaction primaire de protéolyse ne doit pas consister à hydrolyser la caséine en ses différents acides aminés constitutifs, mais à hydrolyser la caséine en fragments de la taille du peptide, du polypeptide ou de la protéine. Ceci n'exclut bien sûr pas que ces fragments pourront, une fois produits par la kappa caséinolyse ménagée, être ensuite plus avant modifiés et/ou hydrolysés au cours du procédé. Initialement, toutefois, la kappa caséinolyse qui est menée conformément à la présente invention conduit à la libération d'au moins un fragment peptidique, polypeptidique ou protéique, et non à un ensemble d'acides aminés individuels. Pour ce faire, on utilisera, conformément à la présente invention, un agent kappa caséinolytique qui présente par ailleurs la propriété de coaguler le lait, c'est-à-dire la propriété de déstabiliser la micelle, et d'ainsi induire la coagulation du lait. Par coagulation du lait, on entend ici floculation ou précipitation. Une méthode conventionnelle pour déterminer si un agent présente la propriété de coaguler le lait est le test de Berridge (Norme 176 :1996 de la Fédération Internationale de Laiterie, 41, square Vergote, B-1040 Bruxelles), ou de Berridge modifié (sans ajout de $CaCl_2$ dans le lait testé).

A titre illustratif, de tels agents libèrent généralement, à partir de la caséine kappa, au moins un fragment dont la taille est inférieure ou égale à 10 kDa, préférentiellement inférieure ou égale à 8 kDa.

Pour réaliser une kappa caséinolyse en milieu alimentaire, on utilise avantageusement une enzyme kappa caséinolytique. Pour mener une kappa caséinolyse ménagée, comme ci-dessus indiquée, on choisira préférentiellement au moins une enzyme kappa caséinolytique qui présente la propriété de coaguler le lait (enzyme kappa caséinolytique coagulante).

Conformément à la présente invention, on choisira au moins une enzyme kappa caséinolytique coagulante qui est d'origine bactérienne. Des bactéries qui sont avantageuses pour la production de telles enzymes comprennent notamment des bactéries qui jusqu'alors étaient considérées comme des contaminants du lait, et dont on cherchait jusqu'alors à limiter le développement et le métabolisme.

De telles bactéries comprennent notamment les bactéries psychrotrophes protéolytiques contaminantes du lait, dont on trouvera de nombreux exemples dans Robin C. Mc Kelar, 1989, « Enzymes of psychrotrophs in raw food », Ed. CRC Press : toutes les protéases de bactéries psychrotrophes qui sont à ce jour connues sont des enzymes kappa caséinolytiques coagulantes, et sont donc appropriées à la mise en oeuvre de l'invention. Les bactéries psychrotrophes protéolytiques produisent généralement ces enzymes en fin de croissance exponentielle, au début de la phase stationnaire.

A titre d'exemples de telles bactéries, peuvent notamment être citées :

- des bactéries Gram négatif aérobies/microaerophiles, telles que celles de la famille des *Pseudomonadaceae* (par exemple, genre *Pseudomonas* tel que les *Pseudomonas chlororaphis* (par exemple ATCC 13985), les *Pseudomonas fluorescens*, les *Pseudomonas fragi* (par exemple ATCC 4973)), telles que celles du genre *Acetobacter*, du genre *Flavobacterium*, du genre *Cytophaga*, du genre *Alcaligenes*, du genre *Achromobacter*,
- des bactéries Gram négatif anaérobies facultatives, telles que celles de la famille des *Enterobacteriacae* (par exemple, genre *Enterobacter* et genre *Serratia*) et le genre *Aeromonas*,
- des bactéries Gram positif non sporulées (par exemple, genre *Streptococcus* ; genre *Lactobacillus* ; genre *Micrococcus* ; genre *Staphylococcus* ; genre *Corynebacterium* ; genre *Microbacterium*),
- des bactéries Gram positif endosporulées (genre *Bacillus* ; genre *Clostridium*).

Parmi les bactéries lactiques protéolytiques, telles que les bactéries du genre *Streptococcus* ou *Lactobacillus*, on trouve en effet des bactéries productrices d'enzymes kappa caséinolytiques coagulantes.

Par « bactérie protéolytique », il est entendu dans la présente demande une bactérie qui, lorsqu'elle se développe dans le lait, hydrolyse des protéines et notamment des caséines, ce qui se traduit dans ce lait par une libération de peptides par rapport au lait témoin.

L'homme du métier peut, au cas par cas, vérifier si une souche donnée produit bien une enzyme kappa caséinolytique coagulante. Il lui suffit de placer la souche candidate sur un substrat contenant de la caséine kappa, puis de vérifier qu'il y a alors hydrolyse de cette caséine, et que l'enzyme produite par cette souche (extraite de la biomasse, ou de la culture de cette souche) a bien la propriété de coaguler le lait (test de Berridge précité).

De préférence, comme indiqué ci-dessus, on choisira une enzyme kappa caséinolytique coagulante d'origine bactérienne qui coupe la caséine kappa au moins, et d'autres caséines le plus souvent.

De manière encore plus préférentielle, on choisira une enzyme kappa caséinolytique coagulante d'origine bactérienne qui est thermorésistante (c'est-à-dire qui présente toujours une activité kappa caséinolytique détectable après avoir été soumise à 95°C pendant au moins 5 min).

Conformément à la présente invention, l'enzyme kappa-caséinolytique peut être apportée sous forme pure ou partiellement purifiée, ou bien sous la forme d'un extrait biologique ou d'un extrait de culture microbiologique contenant une telle enzyme, tel qu'un extrait protéique de milieu de culture microbiologique. L'enzyme kappa-caséinolytique peut également être apportée sous la forme d'une source enzymatique telle que par exemple un microorganisme producteur d'une telle enzyme, qui sera directement ajouté au substrat laitier et placé dans des conditions favorables à son métabolisme, de manière à que ce microorganisme synthétise les enzymes kappa-caséinolytiques coagulantes.

Des enzymes kappa-caséinolytiques coagulantes d'origine bactérienne sont disponibles dans le commerce, par exemple l'enzyme EC 3.4.24.33 commercialisée par Roche Diagnostics GmbH sous la référence Endoprotéinasé Asp-N « Sequencing Grade » Cat-No. : 1054589, l'enzyme EC 3.4..21.62 Carlsberg commercialisée par Sigma sous le nom de Subtilisine et sous la référence P5380.

Alternativement, les enzymes kappa-caséinolytique coagulantes peuvent être purifiées du milieu de culture bactérien selon un procédé tel que ceux décrits par Robert K. Scopes (Robert K. Scopes, 1987, Ed. Springer-Verlag, « Protein purification. Principles and Practice », Second Edition). On peut également choisir de ne pas purifier complètement l'enzyme, et d'utiliser un extrait biologique des bactéries, ou un extrait protéique de milieu de culture bactérienne.

On peut également choisir d'apporter au substrat laitier les bactéries productrices d'enzymes elles-mêmes.

On peut aussi, bien entendu, choisir de transformer génétiquement des cellules hôtes, par exemple des bactéries telles que *E. coli* ou des levures telles que *S. cerevisae* ou *Pichia pastoris*, de manière à ce qu'elles produisent, et de préférence hyper-produisent, de telles enzymes (*cf.* « Current Protocols in Molecular Biology », J. Wiley and Sons, 1994, Eds. Frederick M. Ausubel, Roger Brent, Robert E. Kingston, David D. Moore, J. G. Seidman, Kevin Struhl). On peut alors choisir soit d'apporter au substrat laitier un extrait biologique de ces clones ou un extrait protéique de leur milieu de culture, soit encore de purifier au préalable les protéases clonées pour les apporter au substrat laitier sous forme pure. L'étape de kappa caséinolyse n'est pas nécessairement une étape distincte de celle de la fermentation lactique : l'étape de kappa caséinolyse peut également être générée par les ferments lactiques. En alternative, ou en complément à l'ajout d'enzymes ou d'une source d'enzymes appropriées, on peut en effet choisir de procéder à la kappa caséinolyse en mettant en oeuvre des bactéries lactiques qui produisent (soit naturellement, soit après transformation génétique) de telles enzymes, tout en assurant leur fonction de ferments lactiques.

Préférentiellement, on choisira d'ajouter une enzyme ou une source d'enzyme thermo-résistante (qui conservera une activité kappa caséinolytique détectable, après avoir été soumise à 95°C pendant au moins 5 min), telle que la protéase de *Pseudomonas fragi* ATCC 4973.

Le choix de la forme sous laquelle est ajoutée l'enzyme kappa caséinolytique et du moment de son ajout dans le substrat laitier dépendent bien entendu des conditions de température et de pH de ce substrat. On peut en effet choisir d'ajouter l'enzyme, ou d'en déclencher la production, à tout moment du procédé de fabrication entre le moment de la collecte du lait et la fin de la fermentation lactique, par exemple après l'étape d'écrémage et de pré-pasteurisation qui est généralement pratiquée sur le lait collecté, lors de l'étape de réfrigération, lors de la standardisation du lait, ou bien encore après la pasteurisation, par exemple lors du refroidissement, de l'ensemencement des ferments lactiques, ou au cours de la fermentation lactique. Il faut donc choisir une enzyme qui est active dans la gamme de pH et dans la gamme de température auxquelles se trouve le substrat en question au cours du procédé. L'homme du métier choisira de préférence, pour un meilleur rendement, des pH et températures qui correspondent aux pH et températures d'activité optimale de l'enzyme.

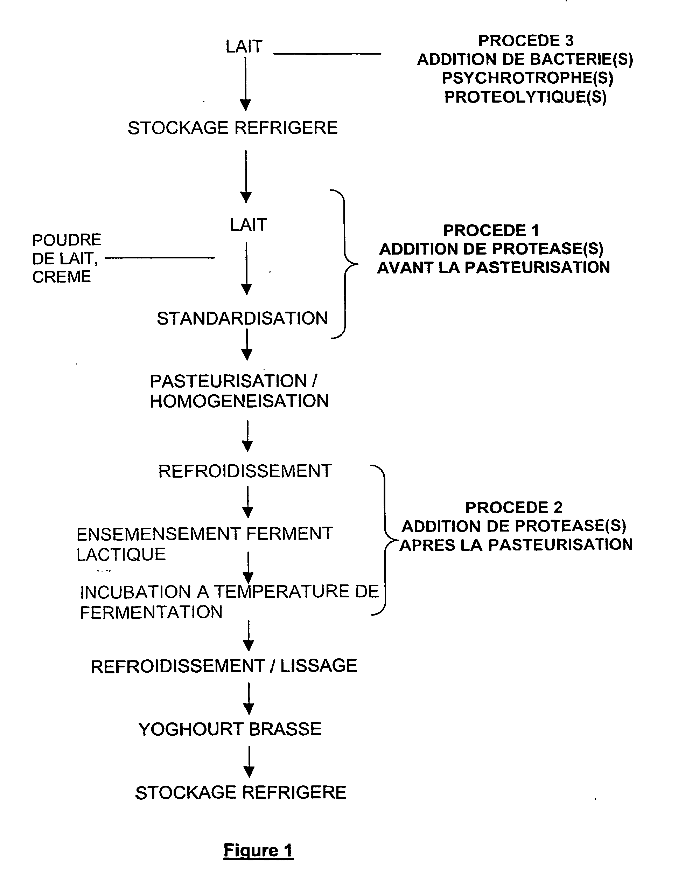

La figure 1 ci-jointe présente de manière schématique un procédé de fabrication de laits fermentés et yoghourts, et y indique, à titre illustratif, quelques étapes au cours desquelles il peut être choisi, conformément à la présente invention, d'ajouter des protéases et/ou des microorganismes protéolytiques. Lorsque les enzymes mises en oeuvre sont thermorésistantes, elles peuvent être ajoutées avant pasteurisation, par exemple lors de l'étape connue sous le nom de standardisation du lait (« procédé 1 » sur la figure 1), ou bien lors du stockage du lait en milieu réfrigéré (« procédé 3 » sur la figure 1).

Lorsque les enzymes sont apportées sous la forme de microorganismes producteurs d'enzymes, il est bien entendu préférable d'ajouter ces microorganismes avant ou lors d'une étape pendant laquelle le lait est placé sous des conditions, et notamment des conditions de température et de pH favorables à leur métabolisme, et en particulier favorables à la production de protéases.

La dose appropriée d'enzymes à ajouter ou, le cas échéant à faire produire, dépend quant à elle bien entendu de la teneur en caséines, et notamment de la teneur en caséine kappa du substrat, ainsi que de l'activité de l'enzyme au pH et à la température choisis.

Conformément à la présente invention, il est nécessaire d'obtenir un taux de kappa caséinolyse d'au moins 20%. Ce taux de 20% est un seuil minimum, mais des taux supérieurs (jusqu'à 100%) sont préférés. Il doit toutefois être noté que dans le cas où la kappa caséinolyse serait effectuée avant pasteurisation, alors il serait avantageux de se limiter à un taux de kappa caséinolyse inférieur ou égal à 70% avant pasteurisation, ceci afin d'éviter des phénomènes de précipitation lors de la pasteurisation.

En utilisant des enzymes kappa caséinolytiques d'origine bactérienne, les inventeurs ont constaté qu'en sus de la kappa caséinolyse attendue, se produisait une protéolyse d'autres caséines, et notamment une protéolyse des caséines beta et alpha. L'apport d'enzymes kappa caséinolytiques d'origine bactérienne dans le substrat laitier induit donc une kappa caséinolyse qui est généralement accompagnée de beta et/ou alpha caséinolyses. Dans ces circonstances, et toujours dans le souci d'éviter des phénomènes de précipitation lors de la pasteurisation, il est préférable limiter chacune des caséinolyses concomitantes (caséinolyses alpha et beta) à un taux inférieur ou égal à 70% avant pasteurisation, lorsque l'enzyme est ajoutée au substrat laitier avant la pasteurisation.

Pour mesurer le taux de kappa caséinolyse dans un substrat laitier, l'homme du métier dispose de techniques standards, telles que par exemple la méthode électrophorétique décrite par Recio et al. 1997 (« Application of electrophoresis to the study of proteolysis of caseins », J. Dairy Res. 64 :221-230). Le taux de kappa caséinolyse peut ainsi être évalué par mesure de la diminution de la surface du pic de caséine kappa observé après traitement enzymatique par rapport à la surface du pic de caséine kappa observé avant traitement enzymatique. Il est à relever qu'à la fin du procédé selon l'invention, on ne visualise généralement pas tous les fragments de caséine kappa qui ont été produits par kappa caséinolyse par cette méthode électrophorétique (il est probable que ces fragments sont en fait utilisés par les ferments lactiques en croissance). C'est pourquoi il est recommandé de suivre la diminution du pic de caséine kappa, plutôt que l'apparition de fragments de caséine kappa.

L'homme du métier saura procéder aux ajustements nécessaires à chaque cas particulier considéré pour atteindre le taux de caséinolyse souhaité.

Dans le cas où ce sont des bactéries psychrotrophes protéolytiques excrétrices qui sont ajoutées au lait avant pasteurisation, on pourra par exemple en ajouter à une dose de $10^4$ à $10^6$ bactéries par ml environ, et conserver le lait ainsi ensemencé dans des conditions favorables au métabolisme de ces microorganismes (températures de 4°C à 15°C environ), pendant un temps suffisamment long pour permettre la libération dans ce lait des enzymes kappa caséinolytiques, ce qui se produit généralement lorsque la population bactérienne est comprise entre $10^6$ et $10^{10}$ bactéries par ml, de préférence entre $10^7$ et $10^9$ bactéries par ml.

En sus de la kappa caséinolyse, le procédé selon l'invention comprend le brassage du produit fermenté. Ce brassage peut se faire selon les techniques classiques, telles que le lissage par passage au travers d'un filtre (« Yoghurt science and Technology », par A.Y. Tamine et R.K. Robinson, Ed. Woodhead Publishing Ltd. 1999).

Le procédé selon l'invention présente l'avantage de permettre la fabrication de produits laitiers fermentés de type yoghourts et laits fermentés dont la texture est améliorée par rapport à des yoghourts et laits fermentés fabriqués de manière comparable, mais sans kappa caséinolyse à au moins 20% et/ou sans brassage. Il permet notamment de fabriquer des yoghourts et laits fermentés dont la viscosité apparente (telle que mesurée à 64s$^{-1}$, 10s à 10°C sur un viscosimètre à cylindres co-axiaux) est augmentée de 20 à 70% par rapport aux yoghourts et laits fermentés témoins. Le procédé selon l'invention permet donc de limiter, voire d'éviter, l'ajout d'agents texturants (tels que gélatine, amidon, pectine) qui est actuellement pratiquée pour conférer la texture appropriée aux produits de type laits fermentés et yoghourts. Il permet aussi de limiter la teneur protéique du substrat laitier utilisé : le substrat laitier peut être moins concentré en protéines tout en conservant un résultat de viscosité apparente correct. Par exemple, les inventeurs ont pu mettre en évidence que, pour atteindre la valeur de viscosité apparente qui est obtenue en appliquant le procédé selon l'invention à un mélange laitier à 4,1% de protéines, il faudrait, en l'absence de traitement kappa caséinolytique, monter la teneur protéique du substrat laitier à 4,6%. Avec le procédé selon l'invention, la fabrication de produits laitiers de type yoghourts et laits fermentés nécessite moins d'agents texturants et de protéines pour un résultat équivalent en terme de texture.

De manière particulièrement remarquable, le procédé selon l'invention ne conduit pas à des phénomènes de synérèse qui seraient inacceptables pour un produit de type lait fermenté ou yoghourt. Ainsi, les inventeurs ont pu constater l'absence de tout phénomène de décantation ou d'exsudation, et ce même après 28 jours de stockage à 10°C. Les produits obtenus présentent et conservent également une texture parfaitement lisse et homogène., et ne présentent pas un mauvais goût.

La présente demande vise également les laits fermentés et yoghourts susceptibles d'être obtenus par le procédé selon l'invention. Les laits fermentés et yoghourts obtenus par le procédé selon la présente invention sont notamment caractérisés par une teneur en kappa caséine sensiblement inférieure à la teneur en kappa caséine normalement observée dans les produits comparables de l'art antérieur. Lorsqu'ils sont issus de lait ou substrat laitier qui a subi un traitement thermique au moins équivalent à la pasteurisation standard (par exemple, 5-10min à 92-95°C), les protéines sériques du produit fini sont globalement dénaturées (de 25 à 99 % de protéines sériques dénaturées, environ). Plus particulièrement, les yoghourts et laits fermentés selon l'invention sont caractérisés par un pourcentage de kappa caséinolyse d'au moins 20%, préférentiellement d'au moins 30%, plus préférentiellement d'au moins 40%, encore plus préférentiellement d'au moins 50%. Ce pourcentage de kappa caséinolyse peut être évalué par électrophorèse capillaire selon la méthode de Recio et al. 1997 (« Application of electrophoresis to the study of proteolysis of caseins », J. Dairy Res. 64 :221-230), en utilisant le fait que la surface du pic de caséine kappa diminue au cours de la fabrication des yoghourts et laits fermentés préparés selon le procédé de l'invention, et en se référant à un pic étalon, tel que le pic d'un composé de référence dont la teneur ne varie pas de manière significative au cours du procédé. Par exemple, le pic de beta-lactoglobuline peut servir de pic étalon. Le calcul suivant permet donc d'évaluer le taux de kappa caséinolyse d'un lait fermenté préparé selon le procédé de l'invention :

$$\text{taux (\%) de kappa caséinolyse} = (1 - ((a_{\kappa e}*a_{\beta lgt}/\ a_{\beta lge})/a_{\kappa t})) * 100$$

avec :

$a_{\kappa e}$ = aire du pic de caséine kappa de l'échantillon de yoghourt
$a_{\kappa t}$ = aire du pic de caséine kappa d'un lait témoin
$a_{\beta lge}$ = aire du pic du composé de référence de l'échantillon de yoghourt (pic de beta-lactoglobuline)
$a_{\beta lgt}$ = aire du pic du composé de référence d'un lait témoin (pic de beta-lactoglobuline)

On entend par lait témoin, un lait de grand mélange qui a été écrémé et pasteurisé à une température de 92 à 95°C pendant 5 à 10 min.

Un tel yoghourt ou lait fermenté contient encore généralement les enzymes kappa caséinolytiques d'origine bactérienne qui ont servi à la kappa caséinolyse.

Alternativement, si l'on détecte dans un yoghourt ou un lait fermenté la présence significative d'une enzyme kappa caséinolytique, on peut en déduire que ce yoghourt ou lait fermenté est conforme à la présente invention. La présence significative de telles enzymes peut être déterminée à l'aide d'un zymogramme de type caséine SDS-Page tel que décrit par C. E. Fajardo-Lira et S.S. Nielsen 1998 (« Effect of psychrotrophic microorganisms on the plasmin system in milk », J. Dairy Sci. 81 :901-908) appliqué directement à des protéases autres que la plasmine. Ce zymogramme devra être comparé à celui obtenu avec un échantillon de culture dans du lait frais des ferments lactiques du produit, afin d'identifier toute protéase ne provenant pas des ferments lactiques.

L'homme du métier trouvera dans l'ouvrage « Yoghurt - Science and Technology », 2ème édition, par A.Y. Tamine et R.K. Robinson (Woodhead Publishing Ltd), une source d'indications techniques intéressantes pour la mise en oeuvre de modes de réalisation de l'invention.

Les exemples qui suivent sont donnés à titre purement illustratif.

## Exemple 1 :

Du lait de grand mélange issu de la collecte chez les producteurs est pré-pasteurisé et écrémé, puis ensemencé par différentes doses d'extrait protéolytique. Cet extrait protéolytique est obtenu par précipitation des protéines du milieu de culture de *Pseudomonas chlororaphis* ATCC 13985. L'activité protéolytique est de 200 unités par ml. Cette activité est obtenue par le test Azocaséine (Kohlmann, K. L., Nielsen, S. S., Steenson, L. R., and Ladisch, M R. 1991. "Production of proteases by psychrotrophic microorganisms", J. Dairy Sci. 74: 3275-3283). Une unité représente une augmentation de 0,01 de l'absorbance à 366 nm par heure d'incubation.

Ces laits ensemencés peuvent être stockés à 4°C pendant quelques heures, à condition de ne pas dépasser les seuils de protéolyse des caséines, critiques pour le traitement thermique (seuil maximal de 70% pour la caséine kappa, seuil de 50% pour la caséine beta).

Des yoghourts brassés sont préparés avec ces laits inoculés et le même lait non inoculé. Pour chaque essai, le lait est standardisé en protéines et en matière grasse à l'aide de poudre de lait écrémé et de crème afin d'obtenir un substrat laitier comportant 4,5% de protéine et 3,2% de matière grasse. La composition de ce substrat laitier est ensuite contrôlée par mesure de la teneur en protéine et en matière grasse (« Détermination de la teneur en matières grasses : méthode d'extraction éthéro-chlorhydrique » NF V04215 - Journal Officiel de Sept. 1969).

Le substrat laitier ainsi préparé est soumis à une pasteurisation (95°C - 8 min) puis à une homogénéisation (250 bar, 2 effets). Après refroidissement à 44°C, le substrat laitier est ensemencé avec un ferment lactique puis fermenté à 43°C. Le pH de « décaillage » (4,65) est atteint au bout de 4h30 (+/- 15 min. ) pour les 4 essais. Le produit est alors lissé et refroidi à 20°C sur une plate-forme comportant une pompe d'alimentation, un filtre (mailles de 350 μm) puis un refroidisseur à plaque. Il est ensuite conditionné en pots de 125 ml.

Des mesures de viscosité et d'exsudation sont réalisées sur les quatre produits au cours du stockage réfrigéré. Les résultats sont synthétisés dans le tableau 1 ci-dessous. Les moyennes de 4 mesures sont présentées avec les écarts types correspondant.

Tableau 1 : Mesures de viscosité et d'exsudation réalisées au cours du stockage réfrigéré sur les yoghourts correspondant aux différents essais.

| Dose d'extrait protéolytique (ml/ 1 L) | Temps de stockage (heures) | Viscosité J+1 (mPa.s) | Viscosité J+14 (mPa.s) | Viscosité J+28 (mPa.s) | Exsudation (g sérum/ 100g produit) |
|---|---|---|---|---|---|
| 0 | 0 | 1125 ±17 | 1160 ±33 | 1173 ±23 | 0 |
| 10 | 20 | 1285 ±12 | 1297 ±9 | 1268 ±11 | 0 |
| 10 | 0 | 1248 ±5 | 1237 ±6 | 1270 ±10 | 0 |
| 20 | 0 | 1430 ±14 | 1393 ±23 | 1430 ±17 | 0 |

Ces résultats mettent en évidence une augmentation importante de la viscosité en relation avec la dose d'extrait protéolytique additionnée au lait. Un court stockage réfrigéré du lait après addition de la dose d'extrait enzymatique ne semble pas avoir une influence importante sur le produit. Les produits ne présentaient pas de décantation et aucune exsudation.

### Exemple 2 :

Du lait de grand mélange est pré-pasteurisé et écrémé, puis ensemencé par *Pseudomonas fragi* ATCC 4973, puis stocké à 4°C pendant 7 jours. Le lait, ensemencé à $2.10^4$ bactéries par ml, a une charge bactérienne de $6.10^9$ psychrotrophes par ml après les 7 jours de stockage. L'évolution de la protéolyse des caséines beta et kappa de ces laits a été mesurée par électrophorèse capillaire. La surface du pic de caséine kappa a diminué de 25% et la somme des surfaces des pics de caséine beta de 35%. Une partie de la protéolyse de la caséine beta est vraisemblablement d'origine plasminique.

Des yoghourts brassés (type Velouté) sont préparés à partir de ce lait ensemencé et stocké 7 jours, d'un lait non ensemencé stocké 7 jours et du lait témoin ensemencé non socké suivant le même procédé que celui décrit dans l'exemple 1. Le pH de décaillage (pH 4,7) est atteint après 5h d'incubation à 43°C pour le produit préparé à partir de lait témoin et après 4h30 pour le produit préparé à partir du lait protéolysé.

Les moyennes de 4 mesures de viscosité sont présentées dans le tableau 2, avec les écarts types correspondant, ainsi que la moyenne des mesures de décantation et d'exsudation.

Tableau 2 : Mesures de viscosités et d'exsudation réalisées au cours du stockage réfrigéré sur des produits incubés 0 et 7 jours à 4°C avec *Pseudomonas fragi*.

| Temps de stockage (jours) | Viscosité J+1 (mPa.s) | Viscosité J+14 (mPa.s) | Viscosité J+28 (mPa.s) | Exsudation (g sérum/ 100 g produit) |
|---|---|---|---|---|
| 0 | 1100 ±20 | 1088 ±25 | 1073 ±26 | 0 ±0 |
| 7 non ensemencé | 1124 ±20 | 1033 ±22 | 1104 ±24 | 0 ±0 |
| 7 | 1510 ±22 | 1498 ±22 | 1600 ±22 | 0 ±0 |

Ces résultats mettent en évidence une augmentation très importante de viscosité indépendante de l'effet physico-chimique du stockage du lait (de l'ordre de 40%). Les produits ne présentaient pas de décantation et aucune exsudation.

### Exemple 3 :

Dans cet exemple, le lait de grand mélange préalablement pré-pasteurisé et écrémé n'a subi aucun stockage, et n'a pas été additionné de souche psychrotrophe protéolytique. Des yoghourts brassés ont été préparés suivant le même procédé que celui décrit dans l'exemple 1. Au moment de l'ensemencement par les ferments lactiques, de petites quantités de protéases de bactéries psychrotrophes ont été ajoutées au substrat laitier (voir Tableau 3 ci-dessous). Les autres étapes du procédé de préparation sont inchangées.

Les protéases sont purifiées à partir des cultures de plusieurs bactéries psychrotrophes protéolytiques (ATCC 13985 de l'exemple 1, et ATCC 4973 de l'exemple 2). L'extrait protéolytique utilisé dans cet exemple est un mélange de protéases dont l'activité protéolytique est de 600 unités par ml. Cette activité est obtenue par le test Azocaséine (*cf.* exemple 1).

Les moyennes des mesures de viscosité, de décantation et d'exsudation réalisées sur les produits sont présentées dans le Tableau 3.

Tableau 3 : Mesures de viscosité et d'exsudation réalisées au cours du stockage réfrigéré sur les yoghourts brassés.

| Extrait protéolytique (mL/1 L) | Viscosité J+1 (mPa.s) | Viscosité J+14 (mPa.s) | Viscosité J+28 (mPa.s) | Exsudation (g sérum/ 100g produit) |
|---|---|---|---|---|
| 0 | 1078 ±10 | 1067 ±38 | 1095 ± 40 | 0 |
| 1 | 1388 ±15 | 1368 ±28 | 1395 ± 62 | 0 |
| 2.5 | 1568 ±26 | 1493 ±21 | 1525 ±24 | 0 |
| 5.0 | 1598 ±7 | 1625 ±24 | 1560 ±18 | 0 |

D'importants gains de viscosité sont observés pour toutes les doses d'extrait protéolytique testées.

**Exemple 4 :**

Des yoghourts brassés maigres sont préparés avec un lait de grand mélange pré-pasteurisé et écrémé inoculé par un extrait protéolytique de *Pseudomonas fragi ATCC 4973*, et le même lait non inoculé. Cet extrait protéolytique de *Pseudomonas fragi* est obtenu de la même façon que l'extrait de *Pseudomonas chlororaphis* de l'exemple 1, et présente une activité protéolytique de 400 unités par ml.

Le lait est standardisé en protéine à l'aide de poudre de lait écrémé afin d'obtenir un substrat laitier comportant 4,9% de protéine. La composition de ce substrat est ensuite contrôlée par mesure de la teneur en protéine (NF V04215, *cf*. exemple 1).

Le substrat ainsi préparé est soumis à une pasteurisation (95°C - 8 min.) puis à une homogénéisation (150 bar, 2 effets). Après refroidissement à 42°C, le substrat est ensemencé avec un ferment lactique puis fermenté à 40°C. Le pH de « décaillage » (4,70) est atteint au bout de 5h 00 (+/- 15 min. ) pour les 2 essais. Le produit est alors lissé et refroidi à 20°C sur une plate-forme comportant une pompe d'alimentation, un filtre (mailles de 350 $\mu$m) puis un refroi-disseur à plaque. Il est ensuite conditionné en pots de 125 ml.

Des mesures de viscosité et d'exsudation sont réalisées sur les produits au cours du stockage réfrigéré. Les résultats sont synthétisés dans le tableau 4 ci-dessous. Les moyennes de 4 mesures sont présentées avec les écarts types correspondants.

Tableau 4 : Mesures de viscosité et d'exsudation réalisées au cours du stockage réfrigéré sur les yoghourts correspondant aux différents essais.

| Dose d'extrait protéolytique (ml/ 1 L) | Temps de stockage (heures) | Viscosité J+1 (mPa.s) | Viscosité J+14 (mPa.s) | Viscosité J+28 (mPa.s) | Exsudation (g sérum/ 100g produit) |
|---|---|---|---|---|---|
| 0 | 0 | 980 $\pm$19 | 1040 $\pm$23 | 1063 $\pm$26 | 0,5 |
| 30 | 0 | 1230 $\pm$14 | 1285 $\pm$20 | 1291 $\pm$15 | 0 |

Cet exemple montre qu'une augmentation importante de la viscosité peut être obtenue sur des produits sans matière grasse. Les produits ne présentaient pas de décantation et une faible exsudation à J+28.

Décret n° 88-1203 du 30 décembre 1988 Décret relatif aux laits fermentés et au yaourt ou yoghourt NOR: ECOC8800150D

Le Premier ministre,
Sur le rapport du ministre d'Etat, ministre de l'économie, des finances et du budget, du garde des sceaux, ministre de la justice, du ministre de l'agriculture et de la forêt et du ministre de la solidarité, de la santé et de la protection sociale, porte-parole du Gouvernement,
Vu la loi du 1 er août 1905 sur les fraudes et falsifications en matière de produits ou de services, et notamment son article 11, ensemble le décret du 22 janvier 1919 modifié pris pour l'application de ladite loi ; Vu la loi du 29 juin 1934 relative à la protection des produits laitiers ;
Vu la loi du 2 juillet 1935 tendant à l'organisation et à l'assainissement du marché du lait ;
Vu le décret du 15 avril 1912 modifié portant application de la loi du 1 er août 1905 susvisée en ce qui concerne les denrées alimentaires ;
Vu le décret du 25 mars 1924 modifié portant application de la loi du 1 er août 1905 en ce qui concerne le lait et les produits de la laiterie ;
Vu le décret n° 84-1147 du 7 décembre 1984 portant application de la loi du 1er août 1905 susvisée en ce qui concerne l'étiquetage et la présentation des denrées alimentaires ;
Le Conseil d'Etat (section des finances) entendu,

Article 1

La dénomination "lait fermenté" est réservée au produit laitier préparé avec des laits écrémés ou non ou des laits concentrés ou en poudre écrémés ou non, enrichis ou non de constituants du lait, ayant subi un traitement thermique au moins équivalent à la pasteurisation, ensemencés avec des microorganismes appartenant à l'espèce ou aux espèces caractéristiques de chaque produit.
La coagulation des laits fermentés ne doit pas être obtenue par d'autres moyens que ceux qui résultent de l'activité des microorganismes utilisés.

La quantité d'acide lactique libre qu'ils contiennent ne doit pas être inférieure à 0,6 gramme pour 100 grammes lors de la vente au consommateur et la teneur en matière protéique rapportée à la partie lactée ne doit pas être inférieure à celle d'un lait normal.

Les laits fermentés doivent être maintenus jusqu'à la vente au consommateur à une température susceptible d'éviter leur altération et qui sera fixée par arrêté conjoint des ministres chargés de l'agriculture, de la santé et de la consommation.

Article 2

La dénomination "yaourt" ou "yoghourt" est réservée au lait fermenté obtenu, selon les usages loyaux et constants, par le développement des seules bactéries lactiques thermophiles spécifiques dites Lactobacillus bulgaricus et Streptococcus thermophilus, qui doivent être ensemencées simultanément et se trouver vivantes dans le produit fini, à raison d'au moins 10 millions de bactéries par gramme rapportées à la partie lactée.

La quantité d'acide lactique libre contenue dans le yaourt ou yoghourt ne doit pas être inférieure à 0,7 gramme pour 100 grammes lors de la vente au consommateur.

Article 3

Les laits fermentés peuvent être additionnés des produits suivants : extraits d'aromates, arômes naturels ainsi que, dans la limite de 30 p. 100 en poids du produit fini, sucres et autres denrées alimentaires conférant une saveur spécifique.

L'incorporation en tant que produits de substitution de matières grasses et protéiques d'origine non laitière est interdite. Ils ne doivent subir aucun traitement permettant de soustraire un élément constitutif du lait mis en oeuvre, notamment l'égouttage du coagulum.

Des arrêtés pris dans les formes prévues à l'article 1er du décret du 15 avril 1912 susvisé fixent la liste et les conditions d'emploi des autres substances et des autres catégories d'arômes autorisées pour la fabrication et la préparation des produits définis au présent décret.

Article 4

*Modifié par Décret 97-2981997-03-27 art. 2 JORF 3 avril 1997.*

L'étiquetage des laits fermentés comporte, outre les mentions prévues par les articles R. 112-6 à R. 112-31 du code de la consommation susvisé :

- en complément de la dénomination de vente, l'indication de l'espèce animale ou des espèces animales dont le lait provient, dès lors qu'il ne s'agit pas de lait de vache ;
- la mention "conservation à..." suivie de l'indication de la température à respecter ;
- la mention "maigre" faisant suite à la dénomination de vente si la teneur en matière grasse du produit, calculée sur la partie lactée, est inférieure à 1 p. 100 en poids ;
- suivant le cas, la mention "sucré" ou le nom de la matière aromatique utilisée si le lait fermenté est sucré ou aromatisé ;
- en cas d'adjonction d'un ou plusieurs des ingrédients prévus à l'article 3, la mention de cet ou de ces ingrédients doit être jointe à la dénomination de vente;
  L'étiquetage des laits fermentés peut comporter la mention "gras", accompagnant la dénomination de vente, si la teneur en matière grasse, calculée sur la partie lactée, est au moins égale à 3 p. 100 en poids.

Article 5

La mention "yaourt" ou "yoghourt" ne peut figurer dans l'étiquetage d'une denrée alimentaire que si le produit concerné renferme du "yaourt" ou "yoghourt" conforme à la définition prévue à l'article 2 ci-dessus.

Article 6

Un arrêté conjoint des ministres chargés de l'agriculture, de la santé et de la consommation fixe, le cas échéant, la durée pendant laquelle les produits définis au présent décret conservent leurs propriétés spécifiques.

Article 7

*Modifié par Décret 97-298 1997-03-27 art. 2 JORF 3 avril 1997.*

Indépendamment des mesures prévues pour la recherche et la constatation éventuelle des délits de fraude en application des articles R. 215-1 à R. 215-15 du code de la consommation, les caractéristiques microbiologiques des laits fermentés et les modalités de contrôle de ces caractéristiques sont fixées par arrêté conjoint des ministres chargés de l'agriculture, de la santé et de la consommation.

Article 8

[*article(s) modificateur(s)*]

Article 9

Le ministre d'Etat, ministre de l'économie, des finances et du budget, le garde des sceaux, ministre de la justice, le ministre de l'agriculture et de la forêt, le ministre de la solidarité, de la santé et de la protection sociale, porte parole du Gouvernement, et le secrétaire d'Etat auprès du ministre d'Etat, ministre de l'économie, des finances et du budget, chargé de la consommation, sont chargés, chacun en ce qui le concerne, de l'exécution du présent décret, qui sera publié au Journal officiel de la République française.

**Revendications**

1.  Procédé de fabrication d'un produit laitier choisi parmi le groupe constitué par les laits fermentés et les yoghourts, **caractérisé par le fait que** :

    - l'on soumet un substrat laitier dont la teneur en protéines est différente de zéro mais inférieure ou égale à 6%, à un traitement thermique au moins équivalent à la pasteurisation, à une fermentation lactique, et à une kappa caséinolyse à l'aide d'au moins une enzyme choisie parmi le groupe des enzymes kappa caséinolytiques d'origine bactérienne qui présentent la propriété de coaguler le lait, de manière à atteindre en fin de fermentation lactique un taux de kappa caséinolyse égal ou supérieur à 20%, ladite kappa caséinolyse étant déclenchée entre la collecte du lait et la fin de la fermentation lactique, sous réserve que si elle est déclenchée avant ledit traitement thermique, on veille alors à ne pas induire de précipitation lors de ce traitement thermique en limitant le taux de chacune des kappa, alpha et beta caséinolyses à un taux inférieur ou égal à 70%, et **par le fait que**
    - l'on brasse ledit substrat après fermentation lactique et traitement kappa caséinolytique.

2.  Procédé selon la revendication 1, **caractérisé en ce que** la teneur en protéines du substrat laitier se situe entre 3 et 5%, bornes incluses.

3.  Procédé selon la revendication 1 ou 2,
    **caractérisé en ce que** le taux de kappa caséinolyse est égal ou supérieur à 30%.

4.  Procédé selon l'une quelconque des revendications 1 à 3, **caractérisé en ce que** le taux de kappa caséinolyse est égal ou supérieur à 40%, préférentiellement égal ou supérieur à 50%.

5.  Procédé selon l'une quelconque des revendications 1 à 4, **caractérisé en ce que** ladite enzyme kappa-caséinolytique coagulante d'origine bactérienne est apportée sous forme pure ou partiellement purifiée, sous la forme d'un extrait biologique ou d'un extrait protéique de milieu de culture microbiologique, ou sous la forme d'un microorganisme producteur d'une telle enzyme.

6.  Procédé selon l'une quelconque des revendications 1 à 5, **caractérisé en ce que** ladite enzyme kappa-caséinolytique coagulante d'origine bactérienne est ou a été produite par une bactérie choisie parmi le groupe des bactéries lactiques protéolytiques et des bactéries psychrotrophes protéolytiques.

7.  Procédé selon l'une quelconque des revendications 1 à 6, **caractérisé en ce que** ladite enzyme kappa-caséinolytique coagulante d'origine bactérienne est ou a été produite par une bactérie psychrotrophe protéolytique choisie parmi le genre *Pseudomonas.*

8. Procédé selon la revendication 7, **caractérisé en ce que** ladite enzyme kappa-caséinolytique coagulante d'origine bactérienne est ou a été produite par une bactérie psychrotrophe protéolytique choisie parmi le groupe constitué par les espèces *Pseudomonas chlororaphis*, les *Pseudomonas fluorescens*, les *Pseudamonas fragi.*

9. Procédé selon l'une quelconque des revendications 1 à 6, **caractérisé en ce que** ladite enzyme kappa-caséinolytique coagulante d'origine bactérienne est ou a été produite par une bactérie lactique protéolytique choisie parmi le groupe des bactéries des genres *Streptococcus* et *Lactobacillus.*

10. Procédé selon l'une quelconque des revendications 1 à 9, **caractérisé en ce que** ladite enzyme kappa-caséinolytique coagulante d'origine bactérienne présente la propriété de conserver une activité kappa caséinolytique détectable après avoir subi un traitement thermique à 95°C pendant au moins 5 min.

11. Procédé selon la revendication 10, **caractérisé en ce que** ladite enzyme kappa-caséinolytique coagulante d'origine bactérienne est apportée avant ledit traitement thermique.

12. Procédé selon la revendication 10 ou 11,
**caractérisé en ce que** ladite enzyme kappa-caséinolytique coagulante d'origine bactérienne est apportée au substrat laitier, sous la forme de bactéries productrices de cette enzyme, avant ou pendant une étape de stockage réfrigéré du lait.

13. Procédé selon l'une quelconque des revendications 10 à 12, **caractérisé en ce que** ladite enzyme kappa-caséinolytique coagulante d'origine bactérienne est apportée au substrat laitier, au moment d'une étape de standardisation du lait, sous forme d'enzyme pure, ou sous la forme d'un extrait biologique ou d'un extrait protéique de milieu de culture microbiologique.

14. Utilisation d'une enzyme choisie parmi le groupe des enzymes kappa caséinolytiques d'origine bactérienne qui présentent la propriété de coaguler le lait, pour la fabrication, par traitement thermique au moins équivalent à la pasteurisation, par fermentation lactique et par kappa caséinolyse, d'un produit laitier brassé choisi parmi le groupe constitué par les laits fermentés et les yoghourts, ladite kappa caséinolyse étant déclenchée entre la collecte du lait et la fin de la fermentation lactique, sous réserve que si elle est déclenchée avant ledit traitement thermique, on veille alors à ne pas induire de précipitation lors de ce traitement thermique en limitant le taux de chacune des kappa, alpha et beta caséinolyses à un taux inférieur ou égal à 70%.

15. Produit laitier brassé choisi parmi le groupe constitué par les laits fermentés et les yoghourts, susceptible d'être obtenu par le procédé selon l'une quelconque des revendications 1 à 13.


**Claims**

1. A method for the production of a dairy product chosen from the group consisting of fermented milks and yogurts, **characterized in that**:

   - a milk substrate whose protein content is different from zero, but less than or equal to 6%, is subjected to a heat treatment at least equivalent to pasteurization, to lactic acid fermentation and to kappa-caseinolysis by means of at least one enzyme chosen from the group of kappa-caseinolytic enzymes of bacterial origin which have the property of coagulating milk, so as to obtain, at the end of lactic acid fermentation, a degree of kappa-caseinolysis equal to or greater than 20%, said kappa-caseinolysis being initiated between the collection of the milk and the end of the lactic acid fermentation, provided that, if it is initiated before said heat treatment, care is then taken not to induce precipitation during this heat treatment by limiting the degree of each kappa, alpha and beta caseinolysis to a degree less than or equal to 70%, and **in that**:
   - said substrate is stirred after lactic acid fermentation and kappa-caseinolytic treatment.

2. The method according to claim 1, **characterized in that** the protein content of the milk substrate is between 3 and 5%, limits inclusive.

3. The method according to claim 1 or 2, **characterized in that** the degree of kappa-caseinolysis is equal to or greater than 30%.

**4.** The method according to any one of claims 1 to 3, **characterized in that** the degree of kappa-caseinolysis is equal to or greater than 40%, preferably equal or greater than 50%.

**5.** The method according to any one of claims 1 to 4, **characterized in that** said coagulating kappa-caseinolytic enzyme of bacterial origin is provided in pure or partially purified form, in the form of a biological extract or of a protein extract of microbiological culture medium, or in the form of a microorganism producing such an enzyme.

**6.** The method according to any one of claims 1 to 5, **characterized in that** said coagulating kappa-caseinolytic enzyme of bacterial origin is or was produced by a bacterium chosen from the group of proteolytic lactic acid bacteria and proteolytic psychrotrophic bacteria.

**7.** The method according to any one of claims 1 to 6, **characterized in that** said coagulating kappa-caseinolytic enzyme of bacterial origin is or was produced by a proteolytic psychrotrophic bacterium chosen from the *Pseudomonas* genus.

**8.** The method according to claim 7, **characterized in that** said coagulating kappa-caseinolytic enzyme of bacterial origin is or was produced by a proteolytic psychrotrophic bacterium chosen from the group consisting of the species *Pseudomonas chlororaphis, Pseudomonas fluorescens* and *Pseudomonas fragi.*

**9.** The method according to any one of claims 1 to 6, **characterized in that** said coagulating kappa-caseinolytic enzyme of bacterial origin is or was produced by a proteolytic lactic acid bacterium chosen from the group of bacteria of the *Streptococcus* and *Lactobacillus* genera.

**10.** The method according to any one of claims 1 to 9, **characterized in that** said coagulating kappa-caseinolytic enzyme of bacterial origin has the property of conserving kappa-caseinolytic activity that is detectable after having undergone a heat treatment at 95°C for at least 5 min.

**11.** The method according to claim 10, **characterized in that** said coagulating kappa-caseinolytic enzyme of bacterial origin is introduced before said heat treatment.

**12.** The method according to claim 10 or 11, **characterized in that** said coagulating kappa-caseinolytic enzyme of bacterial origin is introduced into the milk substrate in the form of bacteria producing this enzyme, before or during a step of refrigerated storage of the milk.

**13.** The method according to any one of claims 10 to 12, **characterized in that** said coagulating kappa-caseinolytic enzyme of bacterial origin is introduced into the milk substrate at the time of a milk standardization step, in the form of a pure enzyme, or in the form of a biological extract or of a protein extract of microbiological culture medium.

**14.** The use of an enzyme chosen from the group of kappa-caseinolytic enzymes of bacterial origin which have the property of coagulating milk, for the production, by heat treatment at least equivalent to pasteurization, by lactic acid fermentation and by kappa-caseinolysis, of a stirred dairy product chosen from the group consisting of fermented milks and yogurts, said kappa-caseinolysis being initiated between the collection of the milk and the end of the lactic acid fermentation, provided that, if it is initiated before said heat treatment, care is then taken not to induce precipitation during this heat treatment by limiting the degree of each kappa, alpha and beta caseinolysis to a degree less than or equal to 70%.

**15.** A stirred dairy product chosen from the group consisting of fermented milks and yogurts, which can be obtained by the method according to any one of claims 1 to 13.

**Patentansprüche**

**1.** Verfahren zur Herstellung eines Milchprodukts, ausgewählt aus der Gruppe, bestehend aus fermentierter Milch und Joghurt, **dadurch gekennzeichnet, dass** man

- ein Milchsubstrat, dessen Gehalt an Proteinen verschieden von Null, aber kleiner oder gleich 6% ist, Folgendem unterzieht: einer Wärmebehandlung, die mindestens gleich der Pasteurisierung ist, einer Milchsäuregärung und einer kappa-Caseinolyse mithilfe mindestens eines Enzyms, ausgewählt aus der Gruppe der kappa-caseinolytischen Enzyme bakteriellen Ursprungs, die die Eigenschaft aufweisen, Milch gerinnen zu lassen, so dass am Ende der Milchsäuregärung ein Anteil an kappa-Caseinolyse von 20 % oder mehr erzielt wird, wobei die kappa-Caseinolyse zwischen dem Sammeln der Milch und dem Ende der Milchsäuregärung ausgelöst wird, unter der Voraussetzung, dass, wenn sie vor der Wärmebehandlung ausgelöst wird, man dann darauf achtet, dass während der Wärmebehandlung keine Ausfällung ausgelöst wird, indem man den kappa-, alpha- und beta-Caseinolysegrad jeweils auf 70% oder weniger beschränkt, und **dadurch gekennzeichnet, dass**
- man das Substrat nach der Milchsäuregärung und der kappa-caseinolytischen Behandlung umrührt.

**2.** Verfahren nach Anspruch 1, **dadurch gekennzeichnet, dass** der Gehalt an Proteinen des Milchsubstrats zwischen 3 und 5%, einschließlich der Grenzen, liegt.

**3.** Verfahren nach Anspruch 1 oder 2, **dadurch gekenn-zeichnet, dass** der kappa-Caseinolysegrad gleich oder höher als 30% ist.

**4.** Verfahren nach einem der Ansprüche 1 bis 3, **dadurch gekennzeichnet, dass** der kappa-Caseinolysegrad gleich oder höher als 40%, vorzugsweise gleich oder höher als 50%, ist.

**5.** Verfahren nach einem der Ansprüche 1 bis 4, **dadurch gekennzeichnet, dass** das besagte gerinnungsfördernde kappa-caseinolytische Enzym bakteriellen Ursprungs in reiner oder teilweise gereinigter Form, in Form eines biologischen Extrakts oder eines Proteinextrakts aus einem mikrobiologischen Kulturmedium oder in Form eines dieses Enzym produzierenden Mikroorganismus eingebracht wird.

**6.** Verfahren nach einem der Ansprüche 1 bis 5, **dadurch gekennzeichnet, dass** das besagte gerinnungsfördernde kappa-caseinolytische Enzym bakteriellen Ursprungs von einem Bakterium produziert wird oder worden ist, ausgewählt aus der Gruppe der proteolytischen Milchsäurebakterien und der psychrotrophen proteolytischen Bakterien.

**7.** Verfahren nach einem der Ansprüche 1 bis 6, **dadurch gekennzeichnet, dass** das besagte gerinnungsfördernde kappa-caseinolytische Enzym bakteriellen Ursprungs von einem psychrotrophen proteolytischen Bakterium produziert wird oder worden ist, ausgewählt aus der Gattung Pseudomonas.

**8.** Verfahren nach Anspruch 7, **dadurch gekennzeichnet, dass** das besagte gerinnungsfördernde kappa-caseinolytische Enzym bakteriellen Ursprungs von einem psychrotrophen proteolytischen Bakterium produziert wird oder worden ist, ausgewählt aus der Gruppe, bestehend aus den Spezies *Pseudomonas chlororaphis, Pseudomonas fluorescens, Pseudomonas fragi.*

**9.** Verfahren nach einem der Ansprüche 1 bis 6, **dadurch gekennzeichnet, dass** das besagte gerinnungsfördernde kappa-caseinolytische Enzym bakteriellen Ursprungs von einem proteolytischen Milchsäurebakterium produziert wird oder worden ist, ausgewählt aus der Gruppe der Bakterien der Gattungen *Streptococcus* und *Lactobacillus*.

**10.** Verfahren nach einem der Ansprüche 1 bis 9, **dadurch gekennzeichnet, dass** das besagte gerinnungsfördernde kappa-caseinolytische Enzym bakteriellen Ursprungs die Fähigkeit besitzt, eine nachweisbare kappa-caseinolytische Aktivität beizubehalten, nachdem es einer Wärmebehandlung bei 95°C für mindestens 5 min unterworfen wurde.

**11.** Verfahren nach Anspruch 10, **dadurch gekennzeich-net, dass** das besagte gerinnungsfördernde kappa-caseinolytische Enzym bakteriellen Ursprungs vor der besagten Wärmebehandlung eingebracht wird.

**12.** Verfahren nach Anspruch 10 oder 11, **dadurch gekennzeichnet, dass** das besagte gerinnungsfördernde kappa-caseinolytische Enzym bakteriellen Ursprungs in das Milchsubstrat in Form von Bakterien, die dieses Enzym produzieren, vor oder während eines Schritts eingebracht wird, bei dem die Milch gekühlt aufbewahrt wird.

**13.** Verfahren nach einem der Ansprüche 10 bis 12, **dadurch gekennzeichnet, dass** das besagte gerinnungsfördernde kappa-caseinolytische Enzym bakteriellen Ursprungs während eines Milch-standardisierungsschritts in Form des reinen Enzyms oder in Form eines biologischen Extrakts oder eines Protein-extrakts aus einer Nährlösung eingebracht wird.

**14.** Verwendung eines Enzyms, ausgewählt aus der Gruppe der kappa-caseinolytischen Enzyme bakteriellen Ursprungs mit der Fähigkeit, Milch gerinnen zu lassen, zur Herstellung, mittels Wärmebehandlung, die mindestens gleich der Pasteurisierung ist, mittels Milchsäuregärung und mittels kappa-Caseinolyse, eines gerührten Milchprodukts, ausgewählt aus der Gruppe, bestehend aus fermentierter Milch und Joghurt, wobei die kappa-Caseinolyse zwischen dem Sammeln der Milch und dem Ende der Milchsäuregärung ausgelöst wird, unter der Voraussetzung, dass, wenn sie vor der Wärmebehandlung ausgelöst wird, man dann darauf achtet, während der Wärmebehandlung keine Ausfällung auszulösen, indem man den kappa-, alpha- und beta-Caseinolysegrad jeweils auf 70% oder weniger beschränkt.

**15.** Gerührtes Milchprodukt, ausgewählt aus der Gruppe, bestehend aus fermentierter Milch und Joghurt, das mit einem Verfahren gemäß einem beliebigen der Ansprüche 1 bis 13 hergestellt werden kann.

LAIT _____     **PROCEDE 3
ADDITION DE BACTERIE(S)
PSYCHROTROPHE(S)
PROTEOLYTIQUE(S)**

↓

STOCKAGE REFRIGERE

↓

POUDRE    LAIT     **PROCEDE 1
DE LAIT, _____     ADDITION DE PROTEASE(S)
CREME**    ↓     **AVANT LA PASTEURISATION**

STANDARDISATION

↓

PASTEURISATION /
HOMOGENEISATION

↓

REFROIDISSEMENT     **PROCEDE 2
ADDITION DE PROTEASE(S)
APRES LA PASTEURISATION**

↓

ENSEMENSEMENT FERMENT
LACTIQUE

↓

INCUBATION A TEMPERATURE DE
FERMENTATION

↓

REFROIDISSEMENT / LISSAGE

↓

YOGHOURT BRASSE

↓

STOCKAGE REFRIGERE

**Figure 1**

18

## RÉFÉRENCES CITÉES DANS LA DESCRIPTION

### Documents brevets cités dans la description

- EP 0810289 A

### Littérature non-brevet citée dans la description

- **Gassem ; Franck.** Physical properties of yogurt made from milk treated with proteolytic enzymes. *J. Dairy Sci.,* 1991, vol. 74, 1503-1511
- **Cousin ; Marth.** Cottage Cheese and Yoghurt Manufactured from Milks Precultured with Psychrotrophic Bacteria. *Cultured Dairy Products Journal,* Mai 1977, 15-1830
- **Tamine ; Robinson.** Yoghurt - Science and Technology. 1985, 17
- **Stephaniak ; Sorhaug.** Thermal denaturation of bacterial enzymes in milk. International dairy federation bulletin. *Heat induced changes in milk,* 1995, vol. 1, 349-363
- **PRABHA H R et al.** Quality of yoghurt and probiotic yoghurt prepared from milk pre-cultured with psychrotrophic Pseudomonas spp. *JOURNAL OF FOOD SCIENCE AND TECHNOLOGY, INDIA,* 1997, vol. 34 (5
- **Kjeldahl ; C. Alais.** Science du lait - Principes des techniques laitières. 1984, 195-196
- **Robin C. Mc Kelar.** Enzymes of psychrotrophs in raw food. 1989
- **Robert K. Scopes.** Protein purification. Principles and Practice. 1987
- Current Protocols in Molecular Biology. J. Wiley and Sons, 1994
- **Recio et al.** Application of electrophoresis to the study of proteolysis of caseins. *J. Dairy Res.,* 1997, vol. 64, 221-230
- **A.Y. Tamine ; R.K. Robinson.** Yoghurt science and Technology. 1999
- **C. E. Fajardo-Lira ; S.S. Nielsen.** Effect of psychrotrophic microorganisms on the plasmin system in milk. *J. Dairy Sci.,* 1998, vol. 81, 901-908
- **A.Y. Tamine ; R.K. Robinson.** Yoghurt - Science and Technology. Woodhead Publishing Ltd
- **Kohlmann, K. L. ; Nielsen, S. S. ; Steenson, L. R. ; Ladisch, M R.** Production of proteases by psychrotrophic microorganisms. *J. Dairy Sci.,* 1991, vol. 74, 3275-3283
- Détermination de la teneur en matières grasses : méthode d'extraction éthéro-chlorhydrique. *NF V04215 - Journal Officiel de Sept. 1969,* Septembre 1969